Europäisches Patentamt

European Patent Office

Office européen des brevets

(11) Veröffentlichungsnummer: **0 220 398**
**A2**

## (12) EUROPÄISCHE PATENTANMELDUNG

(21) Anmeldenummer: **86110837.1**

(22) Anmeldetag: **05.08.86**

(51) Int. Cl.⁴ **A23G 3/04** , A23G 3/02

(30) Priorität: **08.08.85 DE 3528426**

(43) Veröffentlichungstag der Anmeldung:
**06.05.87 Patentblatt 87/19**

(84) Benannte Vertragsstaaten:
**AT CH DE FR GB IT LI SE**

(71) Anmelder: **Mederer GmbH**
**Oststrasse 94**
**D-8510 Fürth(DE)**

(72) Erfinder: **Crozat, Bertrand**
**Oberfürberger Strasse 14**
**D-8510 Fürth(DE)**
Erfinder: **Mederer, Herbert**
**Sperberstrasse 24a**
**D-8510 Fürth(DE)**

(74) Vertreter: **Hafner, Dieter, Dr.rer.nat.,**
**Dipl.-Phys.**
**Ostendstrasse 132**
**D-8500 Nürnberg 30(DE)**

(54) **Wärmeaustauscher für Giessmassen.**

(57) Bei einer Vorrichtung zum Temperieren bzw. Kochen von Medien z.B. Hartzuckermassen, Weichzuckermassen und Gelatine-Gießmassen usw. für kontinuierlich arbeitende Produktionsanlagen wird eine kurze Verweilzeit der Masse bei gleichzeitigem optimalen Lösen der Bestandteile dieser dadurch erreicht, daß ein Behälter, zwischen einer Massenzuführleitung und einer Massenabführleitung mehrere über die Höhe des Behälters in Abständen Führungsbleche, mit mindestens einer Durchflußöffnung für die zu bearbeitende Massen aufweist und daß z.B. in axialer Richtung des Behälters ein oder eine Anzahl von Durchflußkörpern angeordnet sind daß diese an ihrem oberen und unteren Ende jeweils in einen Raum münden, und daß durch die Durchflußkörper ein heißes Medium geleitet wird das die Masse bzw. die Gießmasse erwärmt.

FIG. 2

## Druckauflöser -Gießmassenerhitzer

Die Erfindung betrifft eine Vorrichtung zum Konditionieren, insbesondere zum Mischen, Auflösen und/oder Temperieren bzw. Kochen von Medien z.B. Hartzuckermassen, Weichzuckermassen und Gelatine-Gießmassen usw. für kontinuierlich arbeitende Produktionsanlagen zur Herstellung gießfertiger Massen auf z.B. Gelatine-, Stärke-, Agar-Agar, Pektin und Gummi-Arabicum-Basis, ebenso für Kombinationen dieser Geliermittel, bestehend aus einem Behälter mit Anschlüssen für ein Medium und einer darin angeordneten Rohrleitung für ein zweites Medium.

Zur Herstellung von Gummi-und Geleewarenmassen auf der Basis von Gelatine, Stärke, Gummi-Arabicum usw. sind konventionelle Kochmaschinen d.h. manuell zu beschickende Satzkocher sowie automatisch beschickte aber dennoch intermittierende Kochmaschinen bekannt. Desweiteren sind zur kontinuierlichen Massenherstellung Vakuum-Kochmaschinen bekannt. Diese Maschinen weisen überwiegend eine Kochschlange auf durch die die zu erwärmende Masse geleitet wird und die von außen durch ein wärmeabgebendes Medium erwärmt wird. Desweiteren ist zur Herstellung von Gummi oder Geleewarenmassen eine Vorrichtung nach dem "Neuen Handbuch der Süßwaren-Industrie", Band I, Seite 144 bekannt, bei der die Masse in einer Rohrschlange mit Turbulenzeinbauten auf die erforderliche Lösetemperatur erhitzt wird. Bei der Herstellung von Massen, insbesondere Gelatine-Gießmassen wird zunächst eine Grundmasse angerührt, die aus z.B. Glucose, Zucker, Gelatine, Wasser usw. besteht. Diese Grundmasse muß nun weiter verarbeitet werden, d.h. ein Mischen und Auflösen oder Suspendieren der trocknen und flüssigen Bestandteile bis zur vollständigen Lösung dieser ist erforderlich. Dies geschieht durch Aufschmelzen bzw. Temperieren und Kochen. Dabei ist es wichtig, daß die Masse unter ständigem Rühren langsam erwärmt wird so daß sich die in ihr enthaltenen Partikel, d.h. zum Beispiel Zucker und gegebenenfalls Stärke, auflösen. Dabei soll jedoch die in der Masse enthaltene Gelatine bzw. der Gelatineanteil absolut schonend behandelt werden, d.h. die Masse soll eine möglichst kurze Verweilzeit im Erhitzer haben aber auch nicht - schockartig erhitzt werden, u.a. da diese Massen sehr schnell anbrennen können. Desweiteren soll eine Vorrichtung zum Erhitzen von Massen so ausgebildet sein, daß durch sie bei kompakten Abmessungen und geringem Energieeinsatz im Verhältnis zur herkömmlichen Vorrichtungen eine hohe Tagesleistung bei der Produktion von Massen erzielt werden kann.

Der Erfindung liegt daher die Aufgabe zugrunde, bekannte Erhitzungsanlagen in ihrem Wirkungsgrad, unter gleichzeitiger Vereinfachung der Bauweise, so zu verbessern, daß sich eine kurze Verweilzeit der Masse im Erhitzer ergibt, die Bestandteile der Masse optimal gelöst werden und ein z.B. Gelatineanteil in der Masse äußerst - schonend behandelt wird.

Diese Aufgabe wird nach der Erfindung im wesentlichen dadurch gelöst, daß in einem Behälter, aus einem z.B. senkrecht stehenden Behältermantel mit einem Deckelteil und einem Bodenteil, zwischen einer Massenzuführleitung und einer Massenabführleitung mehrere über die Höhe des Behälters in Abständen Führungsbleche, mit mindestens einer Durchflußöffnung für die zu bearbeitende Masse angeordnet sind und daß z.B. in axialer Richtung des Behältermantels ein oder eine Anzahl von Durchflußkörpern, z.B. parallel zueinander an geordnet sind und daß diese an ihrem oberen ud unteren Ende in einem oberen Raum und unteren Raum münden, derart, daß vom oberen Raum durch (die) den Durchflußkörper in den unteren Raum ein heißes Medium geleitet wird und daß die zu erwärmende Masse über die Führungsbleche vom kalten. zum warmen Bereich des Behälters geführt wird.

Bei der erfindungsgemäßen Vorrichtung sind Öffnungen in den Führungsblechen an einer Seite als segmentartige Abschnitte ausgebildet und diese Abschnitte aufeinander folgenden Führungsblechen mit einem Versatz von etwa 180° zueinander angeordnet.

Durch diese Ausbildung ergibt sich eine zwangsweise Umlenkung der Masse im Behälter durch die im Behälter angeordneten in Längsrichtung des Behälters verlaufenden Rohre, wobei durch die eng nebeneinander angeordneten Rohre eine zusätzliche Verwirbelung außer dem intensiven Wärmeaustausch erreicht wird.

Gemäß einem vorteilhaften Ausführungsbeispiel der Erfindung ist in den Führungsblechen eine z.B. kreisförmige oder eine beliebige Öffnung bzw. ein beliebiger Ausschnitt vorgesehen. Die geometrische Form dieser Ausschnitte erlaubt eine zusätzliche Verwirbelung der in der Masse enthaltenen Bestandteile.

Gemäß einer Weiterbildung der Erfindung sind Führungsbleche und Prallbleche abwechselnd hintereinander angeordnet und zwar so daß die Öffnungen bzw. Ausschnitte in den Führungsblechen und die diesen Öffnungen bzw. Ausschnitten gegenüberliegen den Prallbleche im kalten Bereich des Behälters eine größere Fläche aufweisen und daß sich diese Flächen zum warmen Bereich des Behälters hin verkleinern. Dadurch wird die im warmen Bereich des Behälters durch das Erhitzen immer dünner werdende Masse beschleunigt und trotz der geringeren Viskosität optimal verquirlt bzw. vermischt.

Zusätzlich können nach einem weiteren Merkmal der Erfindung, die Abstände der Prallbleche zu den Führungsblechen zum warmen Bereich des Behälters hin verkleinert werden.

Zur weiteren Erhöhung bzw. Ausnutzung des Wärmeübergangs an den im Behälter angeordneten Rohren sind die Führungsbleche und die jeweils gegenüberliegenden Prallbleche mit abwechselnd verschieden großen Öffnungen bzw. Durchmessern angeordnet.

In vorteilhafter Weise wird, nach einem Ausführungsbeispiel der Erfindung, die Führungsbleche bzw. Prallbleche wellenförmig ausgebildet. Dadurch werden beim Umleiten der zu bearbeitenden Masse zusätzliche Turbulenzen bzw. eine bessere Vermischung der in der Masse enthaltenen Partikel erreicht.

Gemäß einer Abwandlung der Erfindung sind die Führungsbleche bzw. Prallbleche gelocht. Diese Lochung kann im kalten Bereich des Behälters einen größeren Querschnitt aufweisen als die Lochung der entsprechenden Bleche im warmen Bereich.

Der erfindungsgemäße Behälter bzw. Vorrichtung kann waagerecht oder schräg angeordnet sind. In noch weiterer Ausgestaltung kann der Behältermantel doppelwandig ausgebildet sein und einen Zuführanschluß und Abführanschluß für ein z.B. wärmeführendes Medium aufweisen. Dadurch wird zusätzlich im Behälter die Fläche zum wirksamen Wärmeübergang zwischen den Medium vergrößert und die Verweilzeit der Masse im Behälter durch das schnellere Erhitzen der Masse zusätzlich verringert. Diese vorteilhafte Ausbildung kann erzielt werden indem der Behältermantel ein integriertes Rohrsystem aufweist.

Im allgemeinen ist es vorteilhaft, wenn der Behälter an seiner Außenseite wärmeisoliert ist.

Um den Wirkungsgrad der erfindungsgemäßen Vorrichtung noch weiter zu erhöhen und um z.B. weitere Energieeinsparungen zu erzielen und um niedrigere Lösetemperaturen bzw. Kochtemperaturen zu erreichen ist, gemäß einer Weiterbildung der Erfindung, in der Auslaßleitung für die temperierte Masse ein Ventil zur Regelung des Behälterinnendruckes angeordnet. Durch dieses Ventil kann sowohl der Druck im Behälterinnenraum sowie die Durchflußgeschwindigkeit bzw. die Verweildauer der Masse im Behälter optimal eingestellt werden.

Weitere Einzelheiten, Vorteile und Merkmale der Erfindung werden anhand der Ausführungsbeispiele gemäß der Zeichnung näher erläutert. Dabei zeigt:

Fig. I schematisch eine perspektivische Darstellung einer erfindungsgemäßen Vorrichtung, und

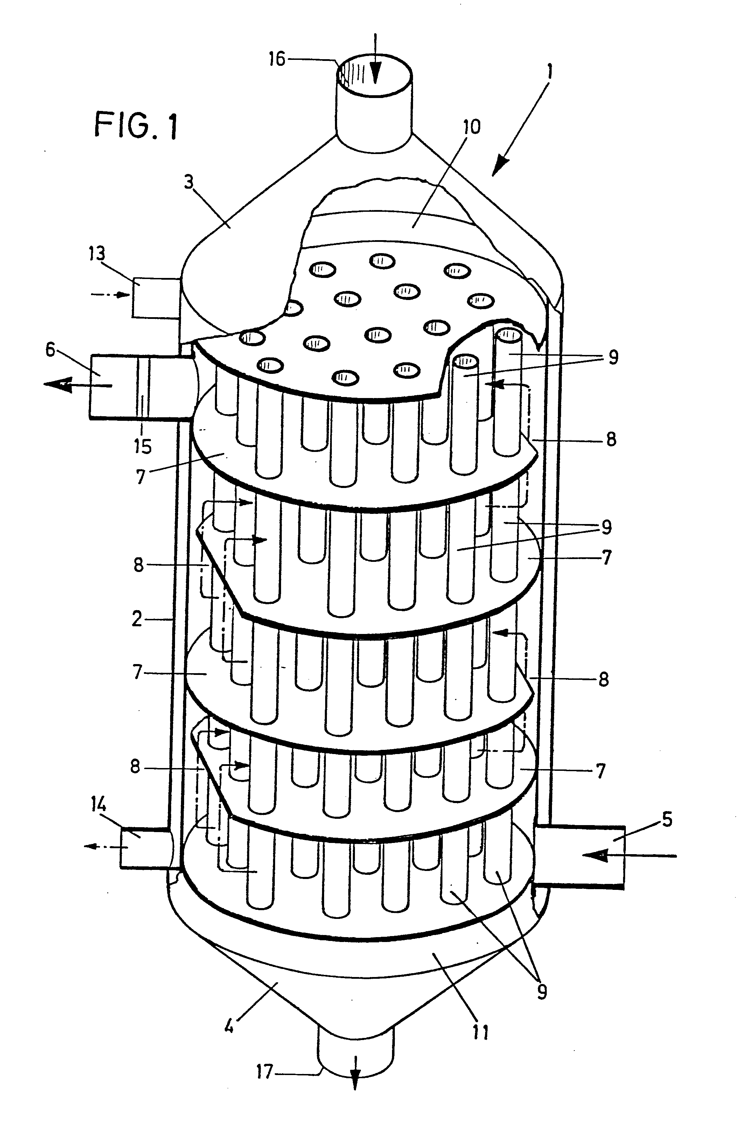

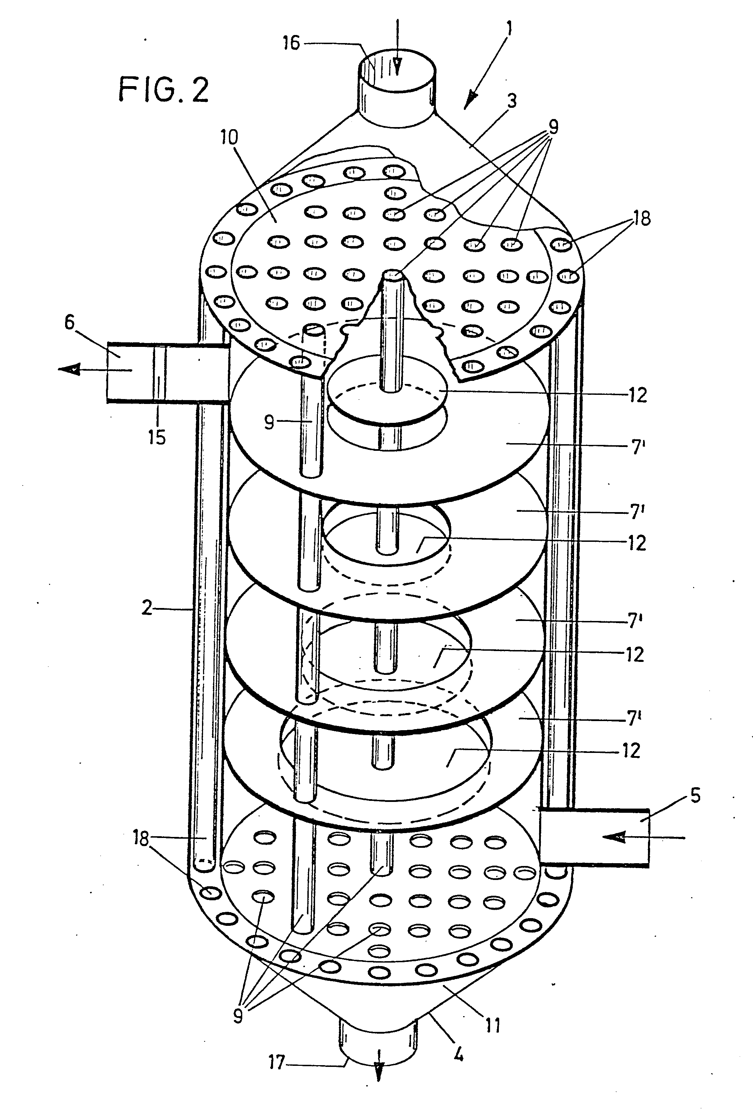

Fig. 2 ein weiteres Ausführungsbeispiel einer erfindungsgemäßen Vorrichtung ein schematischer, perspektivischer Darstellung.

In Fig. I ist eine erfindungsgemäße Vorrichtung, insbesondere zum Mischen, Auflösen und Temperieren bzw. Kochen von Gelatine-Gießmassen für kontinuierlich arbeitende Produktionsanlagen dargestellt. Diese Vorrichtung besteht im allgemeinen aus einem Behälter I der einen senkrecht stehenden zylinderförmigen Behältermantel 2 aufweist und der oben und unten von einem konischen oder flachen Deckelteil 3 bzw. Bodenteil 4 abgeschlossen wird. Am Deckelteil 3 ist ein Einlaßstutzen I6 angeordnet, durch den ein wärmeführendes Medium in den oberen Behälterraum I0 geleitet wird. Desgleichen ist im Boden teil 4 ein Auslaßstutzen I7 angeordnet. Der obere Behälterraum I0 ist mit dem unteren Behälterraum II durch Durchflußkörper, z.B. parallel angeordnete Rohrreihen, die auch zueinander versetzt sein können, verbunden. Durch diese Durchflußkörper bzw. Rohre wird das wärmeführende Medium vom oberen zum unteren Behälterraum geleitet. Im Innenraum des Behälters sind in senkrechten Abständen, die sich nach oben hin verringern können, Führungsbleche mit segmentartigen Abschnitten angeordnet, und zwar so daß die segmentartigen Abschnitte sich abwechselnd gegenüberliegen. Am Behältermantel 2 ist eine Massenzuführleitung 5 angeordnet, durch die das zu erhitzende Medium bzw. die zu erhitzende Gießmasse mit Überdruck durch eine in der Zuführleitung 5 angeordneten Pumpe in den Behälterinnenraum gepumpt wird. Durch die gitterförmig angeordneten Rohre 9, durch die das wärmeführende Medium fließt bzw. geleitet wird findet zum einen eine Wärmeabgabe an die die Wandung der Rohre benetzende Masse statt und durch das Umströmen bzw. Umleiten eine optimale Vermischung bzw. Verwirbelung der in der Masse enthaltenen Bestandteile. Die Führungsbleche 7 weisen segmentartige Durchflußöffnungen 8 auf. Diese Durchflußöffnungen 8 sind für den Durchtritt der Masse in den jeweils darüberliegenden Raum vorgesehen. Da diese Durchflußöffnungen 8 einen kleineren Querschnitt als die Massenzuführleitung 5 aufweist, kommt es innerhalb der Masse jeweils zu einem Druckanstieg vor der Durchflußöffnung und nach dieser zu einem Druckabfall. Durch die wechselseitige Anordnung der Durchflußöffnungen bzw. die übereinanderliegende Anordnung der Führungsbleche wird die Masse zum oberen Teil des Behälters hin immer mehr erhitzt, da das wärmeführende Medium von oben in den Behälter einströmt bzw. von oben nach unten die Durchflußkörper bzw. Rohre 9 erhitzt. Dies hat den Vorteil, daß die zu bearbeitende Masse auf ihrem Weg vom unteren Teil des Behälters zum oberen Teil des Behälters schonend erwärmt bzw. erhitzt wird. Durch ein in der Massenabführleitung angeordnetes Ventil l5 kann der Massenstrom im Behälter bzw. der Behälterinnendruck und die Durchlaufgeschwindigkeit der Masse durch den Behälter geregelt werden. Wie in Fig.l dargestellt, ist der Behältermantel2 hohl ausgebildet und mit einem Zuführanschluß l3 und einem Abführanschluß l4 versehen durch die zusätzlich das wärmeführende Medium geleitet werden kann. Dadurch ergibt sich ein noch besserer Wirkungsgrad in Bezug auf die Erhitzung der durchströmenden Masse.

In Fig.2 ist ein weiteres Ausführungsbeispiel der erfindungsgemäßen Vorrichtung dargestellt. Im Behälterinnenraum sind abwechselnd Führungsbleche 7' und Prallbleche l2 vorgesehen. Die Führungsbleche 7' weisen kreisförmige Ausschnitte auf, wobei diesen Ausschnitten entsprechend dimensionierte Prallbleche gegenüberliegend angeordnet sind. Die Durchmesser dieser kreisförmigen Ausschnitte sowie die analogen Durchmesser der Prallbleche l2 verringern sich zum kalten Bereich des Behälters l bzw. nach oben hin. Desgleichen verringern sich die senkrechten Abstände der Führungsbleche 7 zueinander zum warmen Bereich des Behälters hin. Die im relativ kalten Bereich des Behälters mit Überdruck eingeführte Masse umströmt zunächst die gitterförmig angeordneten Rohre 9, von denen in Fig.2 nur zwei dargestellt sind, durch die das wärmeführende Medium von oben nach unten geleitet wird, d.h. entgegengesetzt dem Massenstrom, so daß eine - schonende bzw. langsame Erwärmung der Masse gewährleistet wird. Die den Behälter durchströmende Masse wird durch die Prall-bzw. Führungsbleche immer wieder umgelenkt und entsprechend verwirbelt. Dadurch wird eine gute Vermischung bzw. Lösung der in der Masse enthaltenen Bestandteile erzielt. Zur Regelung des Massenstromes bzw. des Behälterinnendruckes ist in der Massenabführleitung ein Regelventil l5 wie in Fig.l beschrieben angeordnet. Im Ausführungsbeispiel nach Fig.2 ist ferner ein integriertes Rohrsystem l8 dargestellt, das im Behältermantel 2 angeordnet ist bzw. diesen bildet. Die vorstehend beschriebene Vorrichtung zum Mischen, Erhitzen und Lösen von Massen läßt sich sowohl im Gleichstrom-als auch im Gegenstromverfahren betreiben. Sie zeichnet sich durch einfachen Aufbau und guten Wirkungsgrad aus und ist besonders geeignet für die Behandlung von Gelatine-Gießmassen.

Bezugszeichenliste

l Behälter
2 Behältermantel
3 Deckelteil
4 Bodenteil
5 Massenzuführleitung
6 Massenabführleitung
7,7' Führungsblech
8 Durchflußöffnung
9 Durchflußkörper
l0 oberer Raum
ll unterer Raum
l2 Prallblech
l3 Zuführanschluß
l4 Abführanschluß
l5 Ventil
l6 Einlaßstutzen
l7 Auslaßstutzen
l8 integriertes Rohrsystem

**Ansprüche**

l. Vorrichtung zum Konditionieren, insbesondere zum Mischen, Auflösen und/oder Temperieren bzw. Kochen von Medien z.B. Hartzuckermassen, Weichzuckermassen und Gelatine-Gießmassen usw. für kontinuierlich arbeitende Produktionsanlagen zur Herstellung gießfertiger Massen auf z.B. Gelatine-, Stärke-, Agar-Agar-, Pektin und Gummi-Arabicum-Basis, ebenso für Kombinationen dieser Geliermittel, bestehend aus einem Behälter mit Anschlüssen für ein Medium und einer darin angeordneten Rohrleitung für ein zweites Medium **dadurch gekennzeichnet, daß** in einem Behälter (l) , aus einem z.B. senkrecht stehenden Behältermantel - (2) mit einem Deckelteil (3) und einem Bodenteil - (4) , zwischen einer Massenzuführleitung (5) und einer Massenabführleitung (6) mehrere über die Höhe des Behälters in Abständen Führungsbleche (7), mit mindestens einer Durchflußöffnung (8) für die zu bearbeitende Masse, angeordnet sind, und daß z.B. in axialer Richtung des Behältermantels - (2) ein oder eine Anzahl von Durchflußkörper(n) (9), z.B. parallel zueinander, angeordnet sind und daß diese an ihrem oberen und unteren Ende in einem oberen Raum (l0) und unteren Raum (ll) münden, derart, daß vom oberen Raum (l0) durch die den Durchflußkörper (9) in den unteren Raum (ll) ein heißes Medium geleitet wird und daß die zu erwärmende Masse über die Führungsbleche (7) vom kalten zum warmen Bereich des Behälters geführt wird.

2. Vorrichtung nach Anspruch l, **dadurch gekennzeichnet, daß** die Öffnungen (8) in den Führungsblechen (7) an einer Seite als segmentartige Abschnitte ausgebildet sind und diese Abschnitte aufeinander folgenden Führungsblechen mit einem Versatz von etwa 180° zueinander angeordnet sind.

3. Vorrichtung nach Anspruch 1 oder 2, **dadurch gekennzeichnet, daß** die Führungsbleche (7) eine z.B. kreisförmige oder eine beliebige Öffnung bzw. Ausschnitt aufweisen.

4. Vorrichtung nach einem der Ansprüche 1 bis 3, **dadurch gekennzeichnet, daß** Führungsbleche (7) und Prallbleche (12) abwechselnd angeordnet sind.

5. Vorrichtung nach Anspruch 3 oder 4, **dadurch gekennzeichnet, daß** die Öffnungen bzw. Ausschnitte in den Führungsblechen (7) und die diesen Öffnungen bzw. Ausschnitten gegenüberliegenden Prallbleche (12) im kalten Bereich des Behälters eine größere Fläche aufweisen und daß sich diese Flächen zum warmen Bereich des Behälters hin verkleinern.

6. Vorrichtung nach Anspruch 1 bis 5, **dadurch gekennzeichnet, daß** sich die Abstände der Prallbleche (12) zu den Führungsblechen (7) zum warmen Bereich des Behälters hin verkleinern.

7. Vorrichtung nach Anspruch 1 bis 6, **dadurch gekennzeichent, daß** die Führungsbleche (7) und die jeweils gegenüberliegenden Prallbleche (12) abwechselnd verschieden große Öffnungen bzw. Durchmesser aufweisen.

8. Vorrichtung nach einem der Ansprüche 1 bis 7, **dadurch gekennzeichnet, daß** die Führungsbleche (7) bzw. Prallbleche (12) wellenförmig ausgebildet sind.

9. Vorrichtung nach einem der Ansprüche 1 bis 8, **dadurch gekennzeichnet, daß** die Führungsbleche (7) bzw. Prallbleche (12) gelocht sind.

10. Vorrichtung nach Anspruch 9, **dadurch gekennzeichnet, daß** die Lochung im kalten Bereich einen größeren Querschnitt aufweist als die Lochung der entsprechenden Bleche im warmen Bereich des Behälters.

11. Vorrichtung nach Anspruch 1 bis 10, **dadurch gekennzeichnet, daß** der Behälter waagrecht oder schräg angeordnet ist.

12. Vorrichtung nach einem der Ansprüche 1 bis 11, **dadurch gekennzeichnet, daß** der Behältermantel (2) doppelwandig ausgebildet ist und einen Zuführanschluß (13) und Abführanschluß (14) für ein, z.B. wärmeführendes, Medium aufweist.

13. Vorrichtung nach Anspruch 12 **dadurch gekennzeichnet, daß** der Behältermantel (2) ein integriertes Rohrsystem (18) aufweist.

14. Vorrichtung nach einem der Ansprüche 1 bis 13, **dadurch gekennzeichnet, daß** der Behälter wärmeisoliert ist.

15. Vorrichtung nach einem der Ansprüche 1 bis 14, **dadurch gekennzeichnet, daß** der Auslaß für ein Medium z.B. für die temperierte Masse ein Ventil (15) zur Regelung des Behälterinnendruckes aufweist.

FIG.1

0 220 398

FIG. 2